# EUROPEAN PATENT APPLICATION

(11) **EP 0 867 123 A1**
(43) Date of publication of application: **30.09.1998**
(21) Application number: 97304887.9
(22) Date of filing: 04.07.1997
(51) Int. Cl.: A23L 1/32

(54) **Whole-egg-like foods**

(30) Priority: 19.03.1997 JP 66410/97
(71) Applicant: Nihon Nosan Kogyo K.K., Yokohama-shi, Kanagawa 220-81 (JP)
(72) Inventor: Sekimoto, Kunitoshi, Machida-shi, Tokyo 194 (JP)
(74) Representative: Woods, Geoffrey Corlett

(57) **Abstract**

A whole-egg-like food contains egg white, a thickening polysaccharide (preferably pectin and a gum) and a coloring matter. The whole-egg-like food has a taste, a feeling on eating, a shade of color and physical properties comparable to those of whole eggs. Because egg yolk is not used, the whole-egg-like food is free of cholesterol and low in calories and can thus be easily eaten even by persons worrying about their intake of eggs for hypercholesterolemia, hyperlipemia, diabetes, obesity etc. In addition, the food, if powdered by lyophilization, can be stored for a long period of time.

## Description

### Field of the Invention

The present invention relates to cholesterol-free whole-egg-like foods containing only egg white but having a taste, a feeling of eating, a shade of color and physical properties comparable to those of whole eggs.

### Background of the Invention

Poultry eggs, particularly chicken eggs and quail eggs are widely used in daily eating habits because they are inexpensive and complete nourishing foods of high nutritive value containing every nutrition other than vitamin C.

Because poultry eggs (referred to hereinafter as "eggs") have physicochemical properties such as thermal coagulation, foaming properties, emulsification properties etc., they are not only eaten as raw eggs but are also provided as a wide variety of cooked or processed foods. For example, there are boiled eggs, omelets, pot-steamed hotchpotches etc. as those utilizing thermal coagulation. As those utilizing the emulsification properties of egg yolk, mayonnaise is a typical example. Those utilizing the foaming properties of egg white are kneaded products such as sponge cakes, meringues, boiled fish pastes etc. Although eggs have a wide variety of uses as described above, their weak point is the highest content of cholesterol among foods. Because an intake of excess cholesterol is a cause of obesity and adult diseases such as hyperlipemia, arteriosclerosis, diabetes etc., the reduction of cholesterol in foods is widely practiced by supervisors in medicine and dietetics as a measure to prevent adult diseases. As a result, many people are enforced to limit their intake of eggs and thus the consumption of eggs is limited.

Egg cholesterol is contained in egg yolk but not in egg white. Hence, there is a proposed cholesterol-free liquid egg product prepared by adding skimmed milk and vegetable oil to egg white and coloring the resulting solution with β-carotene as a coloring agent (Japanese Patent Laid-Open Publication No. 132,261/1974). However, this product is not satisfactory though free of cholesterol because it tastes bad and differs from usual eggs in its taste and physical properties when cooked.

### SUMMARY OF THE INVENTION

Therefore, the object of the present invention is to provide cholesterol-free whole-egg-like foods containing only egg white but having a taste, a feeling of eating, a shade of color and physical properties comparable to those of whole eggs.

As a result of their eager research, the present inventors found that whole-egg-like foods, which is satisfactory in tastes and is capable of being cooked and processed in the same manner as whole eggs, can be obtained by adding a specific thickening polysaccharide and coloring matter to egg white and mixing them, to complete the present invention.

That is, the present invention is a whole-egg-like food comprising egg white, a thickening polysaccharide and a coloring matter.

### DETAILED DESCRIPTION OF THE INVENTION

Hereinafter, the present invention is described in detail.

The egg white used in the present invention may be any poultry egg white, preferably chicken egg which may be not only raw egg white but also dried egg white and frozen egg white.

The thickening polysaccharide used in the present invention consists of a combination of gum and pectin where the gum and pectin are used preferably in a ratio of 1 : 2 to 1 : 3 (ratio by weight). The gum confers whole-egg-like thickening properties while pectin confers unique tastes inherent in egg yolk lipid on the resulting product.

The gum includes plant exudates such as Gum Arabic, Gum Tragacanth, Gum Ghatti and Gum Karaya and plant seed extracts such as Guar Gum, Locust Bean Gum as plant gums, and microbial products such as xanthane gum etc. These gums may be used singly or in combination. For example a mixture of xanthane gum and guar gum is preferably used where xanthane gum and guar gum are mixed preferably in a ratio of 1 : 4 to 1 : 5 (ratio by weight).

The thickening polysaccharide consisting of gum and pectin as described above is used in the range of 0.1 to 5% by weight, preferably 0.5 to 1% by weight of egg white.

To regulate viscosity, carrageenan gum, carboxymethylcellulose, casein etc. can be added as necessary.

The coloring matter used in the present invention may be any natural coloring matters derived from plants which can impart shades of color similar to those of whole eggs. Specifically, a mixture of commercially available Yellow Color and Orange Color, extracted from natural plants, is preferably used. Yellow Color includes Mary Gold coloring matter etc. and Orange Color includes Paprika pigment, cayenne pepper coloring matter etc.

Yellow Color and Orange Color are mixed preferably in a ratio of e.g. 1 : 0.02 to 1 : 0.1 (ratio by weight), and this mixture is used in the range of 0.05 to 0.5 % by weight, preferably 0.1 to 0.3 % by weight of egg white.

In the present invention, flavors may be used at the time of cooking to give tastes similar to those of whole eggs, and chicken flavors are preferably used.

A wide variety of food additives such as stabilisers, antioxidants, seasonings, preservatives etc. approved for foods may further be added as necessary.

The whole-egg-like food of the present invention is obtained by adding the thickening polysaccharide, coloring matter and flavor described above to egg white and then uniformly mixing and stirring them. Their mixing and stirring are carried out at ordinary temperature if necessary under heating at 55 to 65 °C, and a high-pressure homomixer is used to improve uniformity. Dried egg white can also be used as a part of egg white to improve the water solubility of the thickening polysaccharide. In this case, the thickening polysaccharide is added to and mixed with dried egg white, and the resulting powder is added together with the remainder of egg white to a solution containing a coloring matter etc. and they are uniformly mixed with stirring.

The whole-egg-like food thus obtained may further be sterilized by heating at about 60 °C and powdered by drying.

For drying, use is made of either lyophilization or spray drying, preferably lyophilization.

According to the present invention, there is provided a whole-egg-like food containing only egg white but having a taste, a feeling of eating, a shade of color and physical properties comparable to those of whole eggs. Because egg yolk is not used, the whole-egg-like food of the present invention is free of cholesterol and low in calories and can thus be easily eaten even by persons worrying about the intake of eggs for hypercholesterolemia, hyperlipemia, diabetes, obesity etc. In addition, the food of the present invention, if powdered by lyophilization, can be stored for a long period of time.

### EXAMPLES

Hereinafter, the present invention is described in detail by reference to Examples which however are not intended to limit the present invention.

### Example 1

0.15 % by weight of plant gums (a mixture of xanthane gum and guar gum in 1 : 5 ) was added to 99.15 % by weight of chicken egg white and the mixture was dissolved, followed by addition of 0.05 % by weight of a chicken flavor, 0.5 % by weight of pectin, 0.15 % by weight of plant coloring matters (a mixture of Yellow Color TH-MA2 and Orange Color TH-PC in 1 : 0.02), and they were mixed and dissolved to give a whole-egg-like food in the form of liquid.

### Example 2

A powder of dried chicken egg white containing 0.03 % by weight of xanthane gum, 0.12 % by weight of guar gum, 0.05 % by weight of chicken flavor powder and 0.5 % by weight of pectin was prepared. 5 % by weight of the resulting powder was added to and dissolved in 20 % by weight of a solution of plant coloring matters (i.e. drinking water containing 0.004 % by weight of Orange Color TH-PC and 0.15 % by weight of Yellow Color TH-MA). 75 % by weight of dried egg white were added to 25 % by weight of the resulting solution, then mixed with stirring, sterilized by heating at 63 °C and further stirred with a TK homomixer at 5000 r.p.s. for 3 minutes. Further, the mixture was made uniform with a high-pressure homomixer at 6000 psi to give a whole-egg-like food in the form of liquid.

### Example 3

Whole-egg-like foods in the form of powder were obtained by lyophilizing the whole-egg-like foods obtained in Examples 1 and 2.

### Example 4

The whole-egg-like foods obtained in Examples 1 to 3 (for the food of Example 3, about 5-fold excess water was added) as such or after sugar, salt, soy sauce, spicery etc. were added as desired, were heated on a frying pan to prepare scrambled eggs. The cooked eggs thus obtained had tastes comparable to those of usual cooked whole eggs and were free of cholesterol and low in calories.

### Example 5

110 g milk, 20 g sugar and vanilla essence were added to 50 g of the whole-egg-like foods prepared in Examples 1 to 3, and each mixture was dissolved and introduced into a pudding vessel and steamed in an oven at 140 °C for 40 minutes and then cooled to give a pudding.

### Example 6

The food of the present invention obtained in Example 1 and a comparative food (where gum and β-carotene were mixed with egg white) were used to prepare scrambled eggs and examined for their functional properties by 10 persons. The results are shown in Table 1.

**Table 1**

| | |
|---|---|
| The food of the present invention is better | 9 persons |
| The comparative product is better | None |
| There is no difference between them | 1 person |

## Claims

1. A whole-egg-like food comprising egg white, a thickening polysaccharide and a coloring matter.

2. A food according to claim 1, wherein the thickening polysaccharide consists of a gum and pectin.

3. A food according to claim 2, wherein the gum is at least one member selected from guar gum, xanthane gum, gum arabic and locust bean gum.

4. A food according to claim 2 or 3, wherein the gum and pectin are present in a weight ratio of from 1:2 to 1:3.

5. A food according to any one of the preceding claims, wherein the thickening polysaccharide is present in an amount of from 0.1 to 5% by weight of egg white.

6. A food according to any one of the preceding claims, wherein the coloring matter consists of Yellow Color:Orange Color in a weight ratio of from 1:0.02 to 1:0.1.

7. A food according to any one of the preceding claims, which is in the form of a liquid.

8. A food according to any one of claims 1 to 6, which is in the form of a powder.

9. A process for the production of a food as defined in claim 1, which process comprises adding the thickening polysaccharides and coloring matter to the egg white, and uniformly mixing.

10. A process according to claim 9, wherein the resultant mixture is sterilised by heating and powdered by drying.
